# EUROPEAN PATENT APPLICATION

(11) **EP 4 461 518 A1**
(43) Date of publication of application: **13.11.2024**
(21) Application number: 24162739.7
(22) Date of filing: 11.03.2024
(51) Int. Cl.: B29C 70/46, B30B 15/06, B29K 101/12

(54) **TOOLING SETS, SYSTEMS AND METHODS FOR STAMP FORMING A WORKPIECE**

(30) Priority: 10.05.2023 US 202318314948
(71) Applicant: The Boeing Company, Arlington, VA 22202 (US)
(72) Inventor: Matlack, Michael P., Arlington, 22202 (US); Hickman, Gregory J., Arlington, 22202 (US); Lloyd, Evan, Arlington, 22202 (US); Morrissey, Emma L., Arlington, 22202 (US); Gutknecht, Andrew, Arlington, 22202 (US)
(74) Representative: Witte, Weller & Partner Patentanwälte mbB

(57) **Abstract**

A tooling set (100) for stamp forming a workpiece (102) includes a first stamping tool (104), a second stamping tool (110) and an elastomeric layer (114) between the first and second stamping tools. The first stamping tool (104) defines a first forming face (108). The second stamping tool (110) defines a second forming face (112). The elastomeric layer (114) defines first and second compliant stamping surfaces (116, 118). A method for stamp forming a workpiece includes positioning a workpiece between the first stamping tool and the elastomeric layer and compressing the workpiece between the first forming face and the first compliant stamping surface in response to the first and second stamping tools being approximated. A system for stamp forming a workpiece includes the tooling set.

## Description

### FIELD

The present disclosure relates generally to stamp forming a workpiece and, particularly, to using a tooling set with an elastomeric layer for stamp forming a workpiece. The tooling set, for example, includes opposed stamping tools configured to receive at least one elastomeric layer that deforms during compression of a workpiece. The elastomeric layer(s) balancing pressures on the workpiece that would otherwise be caused by compression between forming faces of the stamping tools. Use of the same elastomeric layer(s) with different stamping tools having different forming faces is contemplated. Various materials are also contemplated for the elastomeric layer and the workpiece.

### BACKGROUND

The current stamp forming of workpieces (e.g., parts) is centered on matched metal die sets, but efforts to scale to larger part sizes presents several challenges associated with the use of such die sets. Variations in material thickness coupled with tool fabrication tolerances often result in nonuniform pressure distribution over the part surface. The pressure variation can produce a manufacturing environment conducive to low material consolidation and subsequent void formation, a significant detriment to part performance. This is typically overcome by increasing stamping pressure. However, increased pressure can lead to excessive part thinning and is impractical for large-scale articles. To improve part quality and improve producibility of large-scale parts, a compliant tool surface is desirable. Boeing currently uses an elastomeric material to fabricate one side of the stamp form die (SFD) tool to achieve more uniform surface pressures. However, the demanding thermal and mechanical environment encountered during part consolidation results in rapid deterioration of the elastomeric inserts. Typical inserts survive less than ten stamp forming cycles and are limited to a specific part geometry. Moreover, the replacement of elastomeric inserts is expensive and time consuming.

Accordingly, those skilled in the art continue with research and development efforts to improve the design of stamp forming tools, particularly stamping tools using elastomeric material.

### SUMMARY

Disclosed are examples of tooling sets, systems and methods for stamp forming a workpiece. The following is a non-exhaustive list of examples, which may or may not be claimed, of the subject matter according to the present disclosure.

In an example, the disclosed method for stamp forming a workpiece includes: (1) positioning the workpiece between a first stamping tool and an elastomeric layer opposing the first stamping tool, the elastomeric layer disposed between the first stamping tool and a second stamping tool, the first stamping tool defining a first forming face and the second stamping tool defining a second forming face opposing the first forming face, the elastomeric layer defining a first compliant stamping surface opposing the first forming face and a second compliant stamping surface opposing the second forming face; and (2) compressing the workpiece between the first forming face and the first compliant stamping surface in response to the first stamping tool and the second stamping tool being approximated.

In another example, the disclosed method for stamp forming a workpiece includes: (1) positioning the workpiece between a first stamping tool and a second stamping tool, the first stamping tool defining a first forming face and the second stamping tool defining a second forming face opposing the first forming face; (2) positioning an elastomeric layer between the first stamping tool and the workpiece, the elastomeric layer defining a first compliant stamping surface opposing the first forming face and a second compliant stamping surface opposing the second forming face and facing the workpiece; and (3) compressing the workpiece between the second compliant stamping surface and the second forming face in response to the first stamping tool and the second stamping tool being approximated.

In an example, the disclosed tooling set for stamp forming a workpiece includes a first stamping tool, a second stamping tool and an elastomeric layer. The first stamping tool having a thickness and defining a first forming face. The second stamping tool having a thickness and defining a second forming face opposing the first forming face. The elastomeric layer having a thickness and disposed between the first stamping tool and the second stamping tool. The elastomeric layer defining a first compliant stamping surface opposing the first forming face and defining a second compliant stamping surface opposing the second forming face.

In an example, the disclosed system for stamp forming a workpiece includes a tooling set. The tooling set including a first stamping tool, a second stamping tool and an elastomeric layer. The first stamping tool having a thickness and defining a first forming face. The second stamping tool having a thickness and defining a second forming face opposing the first forming face. The elastomeric layer having a thickness and disposed between the first stamping tool and the second stamping tool. The elastomeric layer defining a first compliant stamping surface opposing the first forming face and defining a second compliant stamping surface opposing the second forming face.

Other examples of the disclosed tooling sets, systems and methods for stamp forming a workpiece will become apparent from the following detailed description, the accompanying drawings and the appended claims.

### BRIEF DESCRIPTION OF THE DRAWINGS

Fig. 1 is a cross-sectional view of an example of a tooling set for stamp forming a workpiece;
Fig. 2 is a flow diagram of an example of a method for stamp forming a workpiece;
Fig. 3, in combination with Fig. 2, is a flow diagram of another example of a method for stamp forming a workpiece;
Fig. 4, in combination with Fig. 2, is a flow diagram of yet another example of a method for stamp forming a workpiece;
Fig. 5, in combination with Fig. 2, is a flow diagram of still another example of a method for stamp forming a workpiece;
Fig. 6, in combination with Fig. 2, is a flow diagram of still yet another example of a method for stamp forming a workpiece;
Fig. 7, in combination with Fig. 2, is a flow diagram of another example of a method for stamp forming a workpiece;
Fig. 8, in combination with Fig. 2, is a flow diagram of yet another example of a method for stamp forming a workpiece;
Fig. 9, in combination with Fig. 2, is a flow diagram of still another example of a method for stamp forming a workpiece;
Fig. 10, in combination with Fig. 2, is a flow diagram of still yet another example of a method for stamp forming a workpiece;
Fig. 11 is a flow diagram of another example of a method for stamp forming a workpiece;
Fig. 12, in combination with Fig. 11, is a flow diagram of yet another example of a method for stamp forming a workpiece;
Fig. 13, in combination with Fig. 11, is a flow diagram of still another example of a method for stamp forming a workpiece;
Fig. 14, in combination with Fig. 11, is a flow diagram of still yet another example of a method for stamp forming a workpiece;
Fig. 15, in combination with Fig. 11, is a flow diagram of another example of a method for stamp forming a workpiece;
Fig. 16, in combination with Fig. 11, is a flow diagram of yet another example of a method for stamp forming a workpiece;
Fig. 17, in combination with Fig. 11, is a flow diagram of still another example of a method for stamp forming a workpiece;
Fig. 18, in combination with Fig. 11, is a flow diagram of still yet another example of a method for stamp forming a workpiece;
Fig. 19, in combination with Fig. 11, is a flow diagram of another example of a method for stamp forming a workpiece;
Fig. 20 is an exploded functional diagram of an example of a system for stamp forming a workpiece;
Fig. 21 is an exploded functional diagram of another example of a system for stamp forming a workpiece;
Fig. 22 is a cross-sectional functional diagram showing an example of a workpiece between a forming face and a compliant stamping surface in a tooling set for stamp forming a workpiece;
Fig. 23 is a cross-sectional functional diagram showing an example of a workpiece between a different forming face and the compliant stamping surface in another tooling set for stamp forming a workpiece;
Fig. 24 is a block diagram of aircraft production and service methodology; and
Fig. 25 is a schematic illustration of an aircraft.

### DETAILED DESCRIPTION

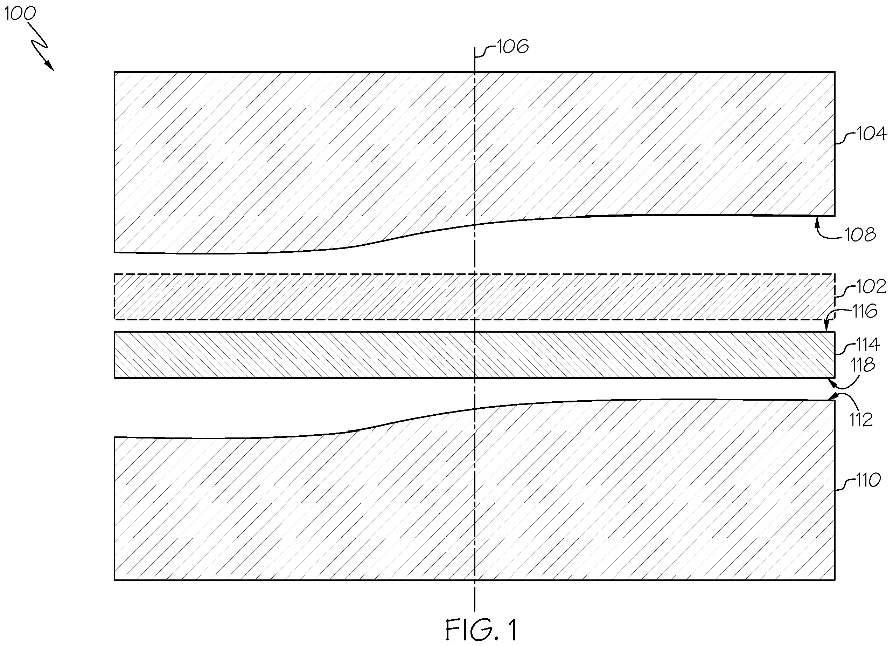

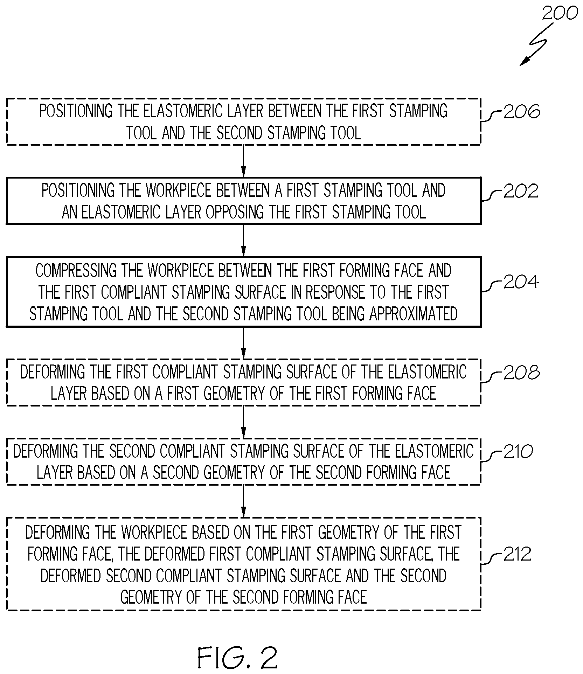

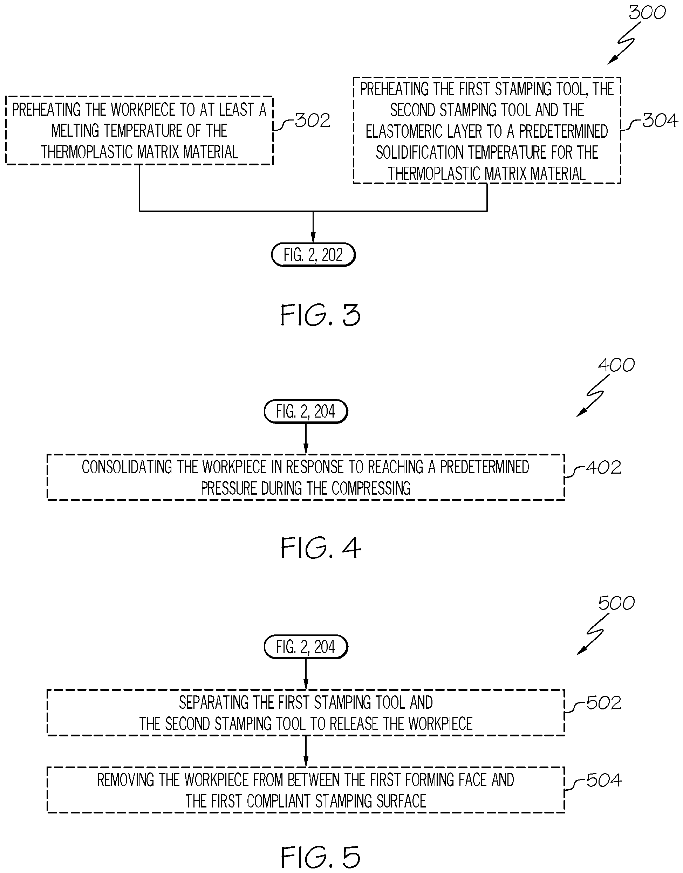

Referring generally to Figs. 1-10, 20 and 21, by way of examples, the present disclosure is directed to a method 200, 300, 400, 500, 600, 700, 800, 900, 1000 for stamp forming a workpiece 102. Optional features in Figs. 2-10 are depicted in dashed blocks of the flow diagrams. Fig. 2 discloses several examples of method 200. Figs. 3-10, in combination with Fig. 2, disclose other examples of method 300, 400, 500, 600, 700, 800, 900, 1000.

With reference again to Figs. 1 and 2, in one or more examples, a method 200 (see Fig. 2) for stamp forming a workpiece 102 begins at 202 where the workpiece 102 is positioned between a first stamping tool 104 and an elastomeric layer 114 opposing the first stamping tool 104. The elastomeric layer 114 is disposed between the first stamping tool 104 and a second stamping tool 110. The first stamping tool 104 defines a first forming face 108. The second stamping tool 110 defines a second forming face 112 opposing the first forming face 108. The elastomeric layer 114 defines a first compliant stamping surface 116 opposing the first forming face 108 and a second compliant stamping surface 118 opposing the second forming face 112. At 204, the workpiece 102 is compressed between the first forming face 108 and the first compliant stamping surface 116 in response to the first stamping tool 104 and the second stamping tool 110 being approximated.

In another example of method 200, the elastomeric layer 114 includes an elastomeric sheet. In a further example, the elastomeric sheet has an even thickness. In another further example, the elastomeric sheet is a commercial off-the-shelf elastomeric sheet.

In yet another example of method 200, the elastomeric layer 114 is removably secured to the second stamping tool 110.

In still another example, the method 200 also includes positioning 206 the elastomeric layer 114 between the first stamping tool 104 and the second stamping tool 110. After 206, the method 200 begins at 202.

In still yet another example, in response to reaching a predetermined pressure during the compressing 204, the method 200 continues from 204 to 208 where the first compliant stamping surface 116 of the elastomeric layer 114 is deformed based on a first geometry of the first forming face 108. At 210, the second compliant stamping surface 118 of the elastomeric layer 114 is deformed based on a second geometry of the second forming face 112. At 212, the workpiece 102 is deformed based on the first geometry of the first forming face 108, the deformed first compliant stamping surface 116, the deformed second compliant stamping surface 118 and the second geometry of the second forming face 112. In a further example, the predetermined pressure is about 400 psi or higher, about 300 psi or higher, about 200 psi or higher, about 100 psi or higher or any other suitable minimum compression pressure. In another further example, the first geometry of the first forming face 108 includes a flat portion, a contour portion, a protruding portion, a ramping portion, a declining portion, a stepping portion, a convex portion or any other suitable geometrical portion in any suitable combination. In yet another further example, the second geometry of the second forming face 112 matches the first geometry of the first forming face 108.

With reference again to Figs. 1-3, in one or more examples, a method 300 (see Fig. 3) for stamp forming a workpiece 102 includes the method 200 (see Fig. 2) described above. In this example, the workpiece 102 is a thermoplastic composite material that includes reinforcement fibers embedded in a thermoplastic matrix material. In one example, the method 300 includes preheating 302 the workpiece 102 to at least a predetermined melting temperature of the thermoplastic matrix material. From 302, the method 300 continues to 202 of method 200. In a further example, the predetermined melting temperature ranges between about 300° C and about 500° C, about 300° C and about 400° C, about 300° C and about 360° C or any other suitable melting temperature range associated with the thermoplastic matrix material.

With continued reference to Figs. 1-3, in another example, the method 300 also includes preheating 304 the first stamping tool 104, the second stamping tool 110 and the elastomeric layer 114 to a predetermined solidification temperature for the thermoplastic matrix material. From 304, the method 300 continues to 202 of method 200 (see Fig. 2) described above. In a further example, the predetermined solidification temperature ranges between about 150 ° C and about 300 ° C, about 200° C and about 300° C, about 250° C and about 300° C or any other suitable solidification temperature range associated with the thermoplastic matrix material.

With reference again to Figs. 1, 2 and 4, in one or more examples, a method 400 (see Fig. 4) for stamp forming a workpiece 102 includes the method 200 (see Fig. 2) described above. In this example, the workpiece 102 is a thermoplastic composite material that includes reinforcement fibers embedded in a thermoplastic matrix material. The method 400 continues from 204 of method 200 to 402 where the workpiece 102 is consolidated in response to reaching a predetermined pressure during the compressing 204. In a further example, the predetermined pressure is about 400 psi or higher, about 300 psi or higher, about 200 psi or higher, about 100 psi or higher or any other suitable minimum consolidation pressure.

With reference again to Figs. 1, 2 and 5, in one or more examples, a method 500 (see Fig. 5) for stamp forming a workpiece 102 includes the method 200 (see Fig. 2) described above. The method 500 continues from 204 of method 200 to 502 where the first stamping tool 104 and the second stamping tool 110 are separated to release the workpiece 102. At 504, the workpiece 102 is removed from between the first forming face 108 and the first compliant stamping surface 116.

With reference again to Figs. 1, 2 and 20, in one or more examples, a method for stamp forming a workpiece 102 includes the method 200 (see Fig. 2) described above. The method continues from 202 of method 200 to position a second elastomeric layer 2002 between the elastomeric layer 114 and the workpiece 102 along a stamping axis 106. The second elastomeric layer 2002 defines a third compliant stamping surface 2004 opposing the second compliant stamping surface 118 and a fourth compliant stamping surface 2006 facing the workpiece 102 and opposing the second forming face 112. Next, the method continues to 204 of method 200. In a further example, the elastomeric layer 114 and the second elastomeric layer 2002 are removably secured to the first stamping tool 104. In another further example, the second elastomeric layer 2002 has different properties from the elastomeric layer 114.

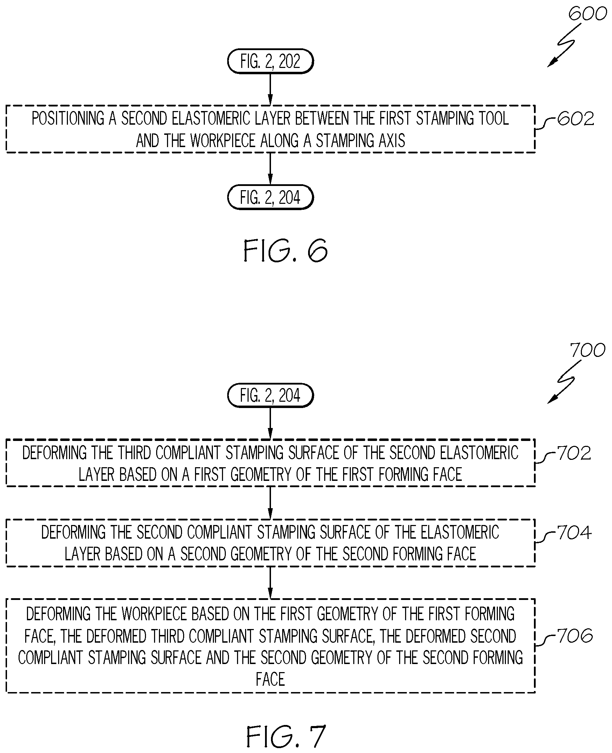

With reference again to Figs. 1, 2, 6 and 20, in one or more examples, a method 600 (see Fig. 6) for stamp forming a workpiece 102 includes the method 200 (see Fig. 2) described above. The method 600 continues from 202 of method 200 to 602 where a second elastomeric layer 2002 is positioned between the first stamping tool 104 and the workpiece 102 along a stamping axis 106. The second elastomeric layer 2002 defines a third compliant stamping surface 2004 opposing the first forming face 108 and a fourth compliant stamping surface 2006 facing the workpiece 102 and opposing the second forming face 112. Next, the method 600 continues to 204 of method 200. In a further example, the second elastomeric layer 2002 is removably secured to the first stamping tool 104.

With reference again to Figs. 1, 2, 7 and 20, in one or more examples, a method 700 (see Fig. 7) for stamp forming a workpiece 102 includes the method 200 (see Fig. 2) described above. The method 700 continues from 204 of method 200 to 702 where, in response to reaching a predetermined pressure during the compressing 204, the third compliant stamping surface 2004 of the second elastomeric layer 2002 is deformed based on a first geometry of the first forming face 108. At 704, the second compliant stamping surface 118 of the elastomeric layer 114 is deformed based on a second geometry of the second forming face 112. At 706, the workpiece 102 is deformed based on the first geometry of the first forming face 108, the deformed third compliant stamping surface 2004, the deformed second compliant stamping surface 118 and the second geometry of the second forming face 112.

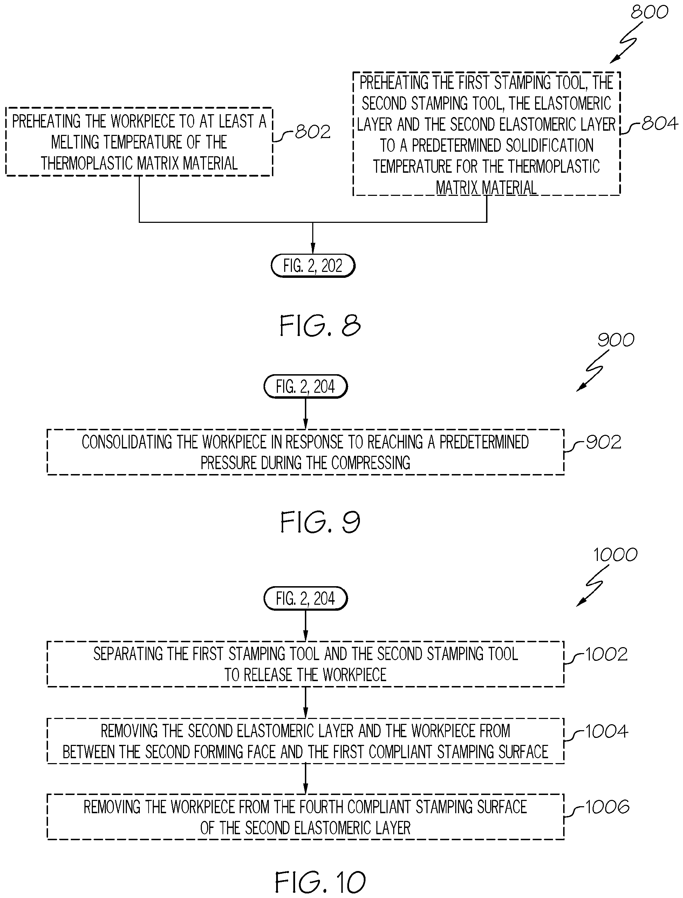

With reference again to Figs. 1, 2, 8 and 20, in one or more examples, in a method 800 (see Fig. 8) for stamp forming a workpiece 102 includes the method 200 (see Fig. 2) described above. In this example, the workpiece 102 is a thermoplastic composite material that includes reinforcement fibers embedded in a thermoplastic matrix material. In one example, the method 800 includes preheating 802 the workpiece 102 to at least a predetermined melting temperature of the thermoplastic matrix material. From 802, the method 800 continues to 202 of method 200.

With continued reference to Figs. 1, 2, 8 and 20, the method 800 also includes preheating 804 the first stamping tool 104, the second stamping tool 110, the elastomeric layer 114 and the second elastomeric layer 2002 to a predetermined solidification temperature for the thermoplastic matrix material. From 804, the method 800 continues to 202 of method 200.

With reference again to Figs. 1, 2 and 9, in one or more examples, a method 900 (see Fig. 9) for stamp forming a workpiece 102 includes the method 200 (see Fig. 2) described above. In this example, the workpiece 102 is a thermoplastic composite material that includes reinforcement fibers embedded in a thermoplastic matrix material. The method 900 continues from 204 of method 200 to 902 where the workpiece 102 is consolidated in response to reaching a predetermined pressure during the compressing 204.

With reference again to Figs. 1, 2, 10 and 20, in one or more examples a method 1000 (see Fig. 10) for stamp forming a workpiece 102 includes the method 200 (see Fig. 2) described above. The method 1000 continues from 204 of method 200 to 1002 where the first stamping tool 104 and the second stamping tool 110 are separated to release the workpiece 102. At 1004, the second elastomeric layer 2002 and the workpiece 102 are removed from between the second forming face 112 and the first compliant stamping surface 116. At 1006, the workpiece 102 is removed from the fourth compliant stamping surface 2006 of the second elastomeric layer 2002.

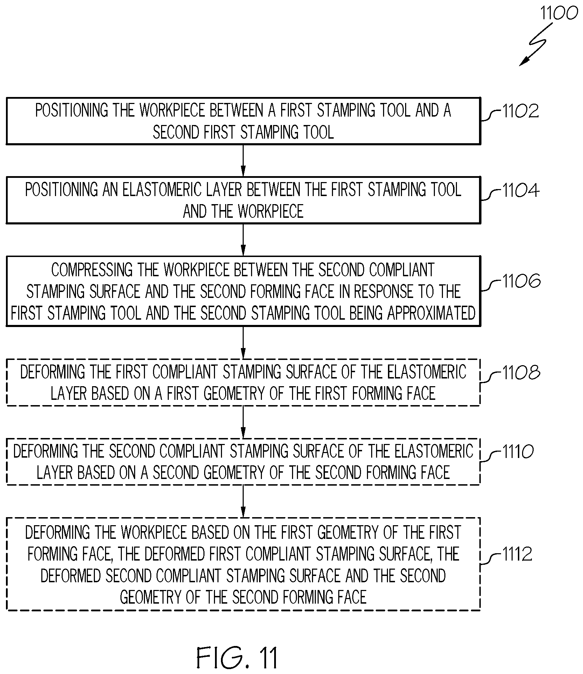

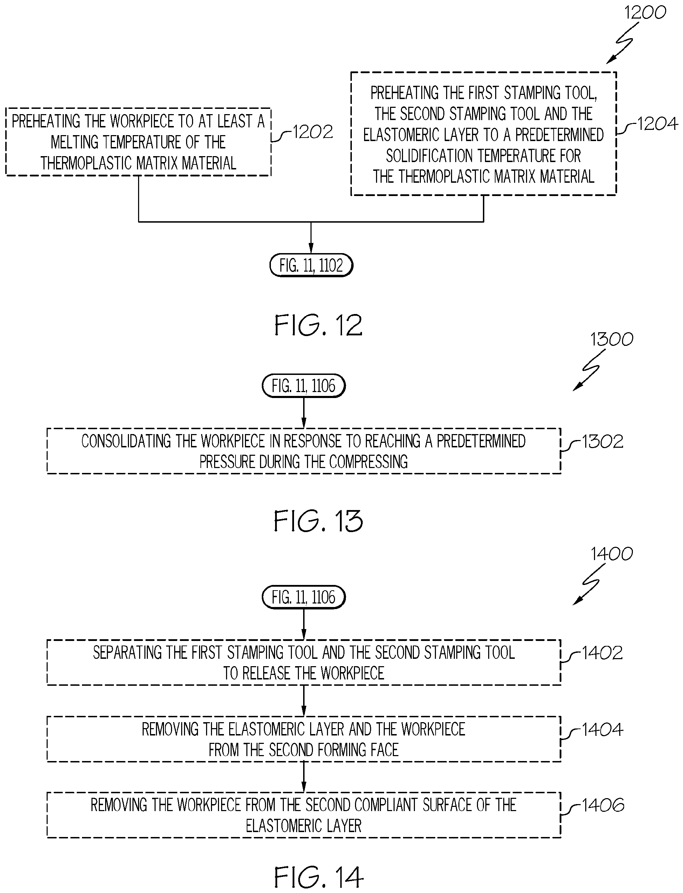

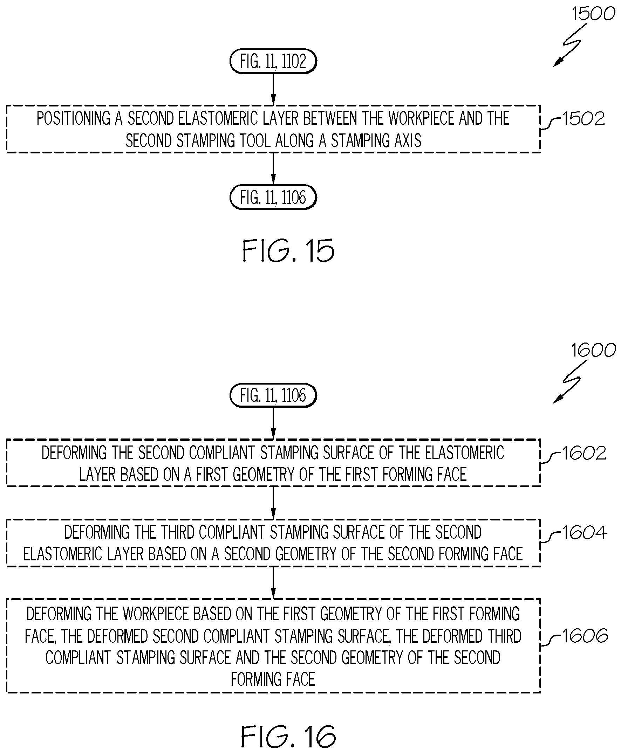

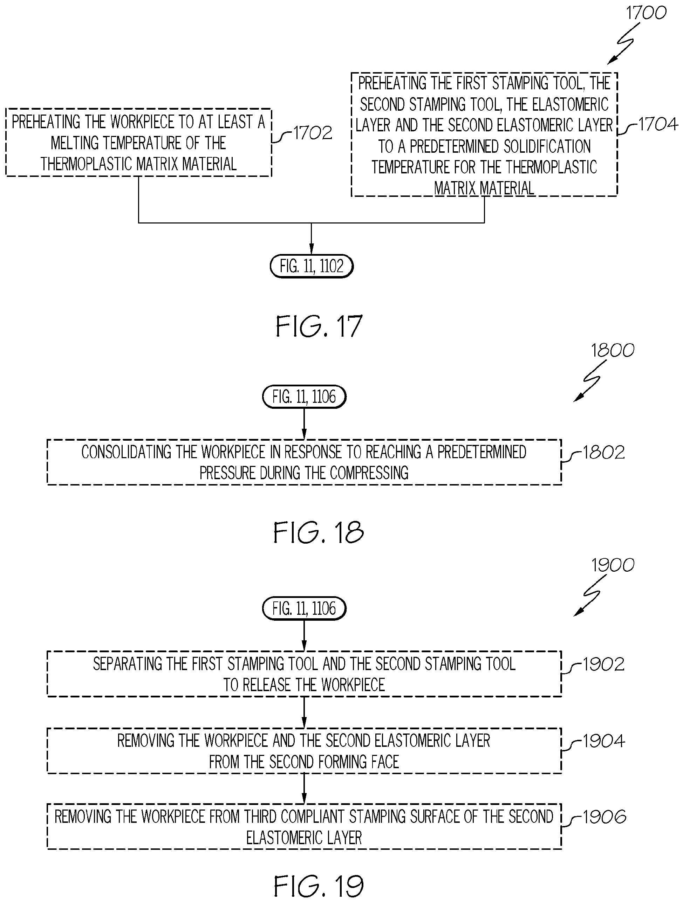

Referring generally to Figs. 1, 11-19, 20 and 21, by way of examples, the present disclosure is directed to a method 1100, 1200, 1300, 1400, 1500, 1600, 1700, 1800, 1900 for stamp forming a workpiece 102. Optional features in Figs. 11-19 are depicted in dashed blocks of the flow diagrams. Fig. 11 discloses several examples of method 1100. Figs. 12-19, in combination with Fig. 11, disclose other examples of method 1200, 1300, 1400, 1500, 1600, 1700, 1800, 1900.

With reference again to Figs. 1 and 11, in one or more examples, a method 1100 (see Fig. 11) for stamp forming a workpiece 102 begins at 1102 where the workpiece 102 is positioned between a first stamping tool 104 and a second stamping tool 110. The first stamping tool 104 defines a first forming face 108. The second stamping tool 110 defines a second forming face 112 opposing the first forming face 108. At 1104, an elastomeric layer 114 is positioned between the first stamping tool 104 and the workpiece 102. The elastomeric layer 114 defines a first compliant stamping surface 116 opposing the first forming face 108 and a second compliant stamping surface 118 opposing the second forming face 112 and facing the workpiece 102. At 1106, the workpiece 102 is compressed between the second compliant stamping surface 118 and the second forming face 112 in response to the first stamping tool 104 and the second stamping tool 110 being approximated.

In another example of method 1100, the elastomeric layer 114 includes an elastomeric sheet. In a further example, the elastomeric sheet has an even thickness. In another further example, the elastomeric sheet is a commercial off-the-shelf elastomeric sheet.

In yet another example of method 1100, the elastomeric layer 114 is removably secured to the first stamping tool 104.

In another example, in response to reaching a predetermined pressure during the compressing 1106, the method 1100 continues from 1106 to 1108 where the first compliant stamping surface 116 of the elastomeric layer 114 is deformed based on a first geometry of the first forming face 108. At 1110, the second compliant stamping surface 118 of the elastomeric layer 114 is deformed based on a second geometry of the second forming face 112. At 1112, the workpiece 102 is deformed based on the first geometry of the first forming face 108, the deformed first compliant stamping surface 116, the deformed second compliant stamping surface 118 and the second geometry of the second forming face 112.

With reference again to Figs. 1, 11 and 12, in one or more examples, a method 1200 (see Fig. 12) for stamp forming a workpiece 102 includes the method 1100 (see Fig. 11) described above. In this example, the workpiece 102 is a thermoplastic composite material that includes reinforcement fibers embedded in a thermoplastic matrix material. In one example, the method 1200 includes preheating 1202 the workpiece 102 to at least a predetermined melting temperature of the thermoplastic matrix material. From 1202, the method 1200 continues to 1102 of method 1100.

With continued reference to Figs. 1, 11 and 12, in another example, a method 1200 also includes preheating 1204 the first stamping tool 104, the second stamping tool 110 and the elastomeric layer 114 to a predetermined solidification temperature for the thermoplastic matrix material. From 1204, the method 1200 continues to 1102 of method 1100 (see Fig. 11) described above.

With reference again to Figs. 1, 11 and 13, in one or more examples, a method 1300 (see Fig. 13) for stamp forming a workpiece 102 includes the method 1100 (see Fig. 11) described above. In this example, the workpiece 102 is a thermoplastic composite material that includes reinforcement fibers embedded in a thermoplastic matrix material. The method 1300 continues from 1106 of method 1100 to 1302 where the workpiece 102 is consolidated in response to reaching a predetermined pressure during the compressing 1106.

With reference again to Figs. 1, 11 and 14, in one or more examples, a method 1400 (see Fig. 14) for stamp forming a workpiece 102 includes the method 1100 (see Fig. 11) described above. The method 1400 continues from 1106 of method 1100 to 1402 where the first stamping tool 104 and the second stamping tool 110 are separated to release the workpiece 102. At 1404, the elastomeric layer 114 and the workpiece 102 are removed from the second forming face 112. At 1406, the workpiece 102 is removed from the second compliant surface of the elastomeric layer 114.

With reference again to Figs. 1, 11 and 20, in one or more examples, a method for stamp forming a workpiece 102 includes the method 1100 (see Fig. 11) described above. The method continues from 1106 of method 1100 to position a second elastomeric layer 2002 between the workpiece 102 and the elastomeric layer 114 along a stamping axis 106. The second elastomeric layer 2002 defines a third compliant stamping surface 2004 facing the workpiece 102 and opposing the first forming face 108 and a fourth compliant stamping surface 2006 opposing the first forming face 112 of the elastomeric layer 114. In a further example, the elastomeric layer 114 and the second elastomeric layer 2002 are removably secured to the second stamping tool 110. In another further example, the second elastomeric layer 2002 has different properties from the elastomeric layer 114.

With reference again to Figs. 1, 11, 15 and 20, in one or more examples, a method 1500 for stamp forming a workpiece 102 includes the method 1100 (see Fig. 11) described above. The method 1500 continues from 1102 of method 1100 to 1502 where a second elastomeric layer 2002 is positioned between the workpiece 102 and the second stamping tool 110 along a stamping axis 106. The second elastomeric layer 2002 defines a third compliant stamping surface 2004 facing the workpiece 102 and opposing the first forming face 108 and a fourth compliant stamping surface 2006 opposing the second forming face 112. Next, the method 1500 continues to 204 of method 200. In a further example, the second elastomeric layer 2002 is removably secured to the second stamping tool 110.

With reference again to Figs. 1, 11, 16 and 20, in one or more examples, a method 1600 for stamp forming a workpiece 102 includes the method 1100 (see Fig. 11) described above. The method 1600 continues from 1106 of method 1100 to 1602 where, in response to reaching a predetermined pressure during the compressing 1106, the second compliant stamping surface 118 of the elastomeric layer 114 is deformed based on a first geometry of the first forming face 108. At 1604, the third compliant stamping surface 2004 of the second elastomeric layer 2002 is deformed based on a second geometry of the second forming face 112. At 1606, the workpiece 102 is deformed based on the first geometry of the first forming face 108, the deformed second compliant stamping surface 118, the deformed third compliant stamping surface 2004 and the second geometry of the second forming face 112.

With reference again to Figs. 1, 11, 17 and 20, in one or more examples, a method 1700 for stamp forming a workpiece 102 includes the method 1100 (see Fig. 11) described above. In this example, the workpiece 102 is a thermoplastic composite material that includes reinforcement fibers embedded in a thermoplastic matrix material. In one example, the method 1700 includes preheating 1702 the workpiece 102 to at least a predetermined melting temperature of the thermoplastic matrix material. From 1702, the method 1700 continues to 1102 of method 1100.

With continued reference to Figs. 1, 11, 17 and 20, the method 1700 also includes preheating 1704 the first stamping tool 104, the second stamping tool 110, the elastomeric layer 114 and the second elastomeric layer 2002 to a predetermined solidification temperature for the thermoplastic matrix material. From 1704, the method 1700 continues to 1102 of method 1100.

With reference again to Figs. 1, 11, 18 and 20, in one or more examples, a method 1800 for stamp forming a workpiece 102 includes the method 1100 (see Fig. 11) described above. In this example, the workpiece 102 is a thermoplastic composite material that includes reinforcement fibers embedded in a thermoplastic matrix material. The method 1800 continues from 1106 of method 1100 to 1802 where the workpiece 102 is consolidated in response to reaching a predetermined pressure during the compressing 1106.

With reference again to Figs. 1, 11, 19 and 20, in one or more examples, a method 1900 for stamp forming a workpiece 102 includes the method 1100 (see Fig. 11) described above. The method 1900 continues from 1106 of method 1100 to 1902 where the first stamping tool 104 and the second stamping tool 110 are separated to release the workpiece 102. At 1904, the workpiece 102 and the second elastomeric layer 2002 are removed from the second forming face 112. At 1906, the workpiece 102 is removed from the third compliant surface of the second elastomeric layer 2002.

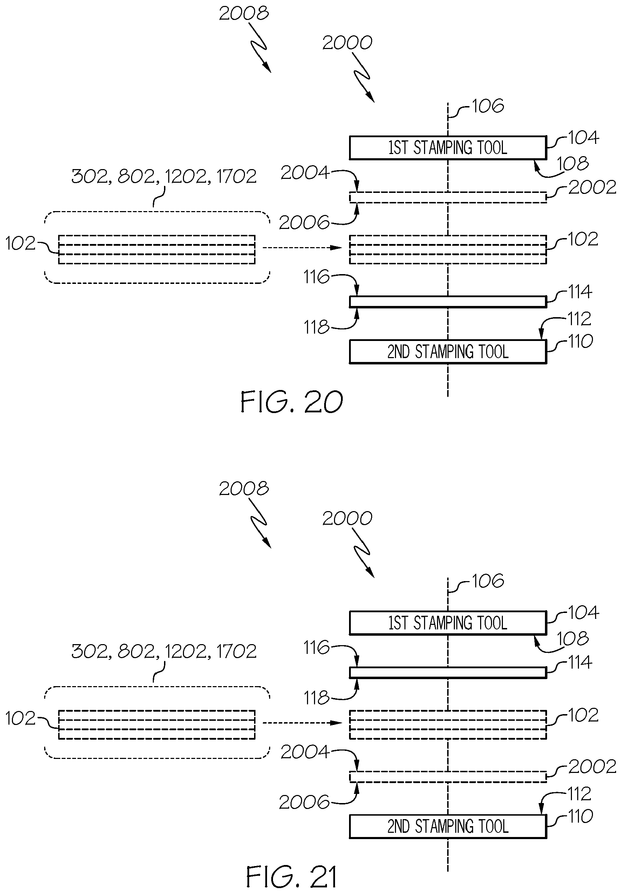

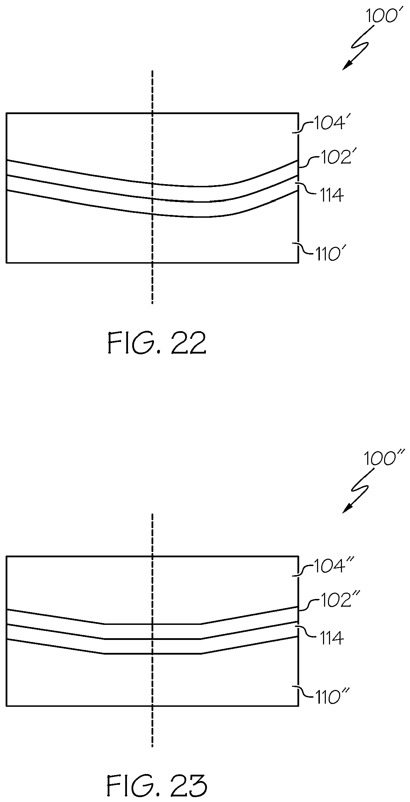

Referring generally to Figs. 1 and 20-23, by way of examples, the present disclosure is directed to a tooling set 100 for stamp forming a workpiece 102. Fig. 1 discloses an example of the tooling set 100 that includes a first stamping tool 104, a second stamping tool 110 and an elastomeric layer 114. Figs. 20 and 21 disclose examples of systems 2008 for stamp forming a workpiece 102 that include a tooling set 2000. Fig. 22 discloses an example of a tooling set 100' in which a workpiece 102' is between a first stamping tool 104' and the elastomeric layer 114. Fig. 23 discloses an example of a tooling set 100" in which a workpiece 102" is between a first stamping tool 104" and the elastomeric layer 114.

With reference again to Figs. 1, 20 and 21, in one or more examples, a tooling set 100 for stamp forming a workpiece 102 includes a first stamping tool 104, a second stamping tool 110 and an elastomeric layer 114. The first stamping tool 104 has a thickness and defines a first forming face 108. The second stamping tool 110 has a thickness and defines a second forming face 112 opposing the first forming face 108. The elastomeric layer 114 has a thickness and is disposed between the first stamping tool 104 and the second stamping tool 110. The elastomeric layer 114 defines a first compliant stamping surface 116 opposing the first forming face 108 and defines a second compliant stamping surface 118 opposing the second forming face 112.

In another example of the tooling set 100, the elastomeric layer 114 includes an elastomeric sheet. In a further example, the elastomeric sheet has an even thickness. In another further example, the elastomeric sheet is a commercial off-the-shelf elastomeric sheet.

In yet another example of the tooling set 100, the first stamping tool 104, the second stamping tool 110 and the elastomeric layer 114 are configured for placement of the workpiece 102 between the first forming face 108 of the first stamping tool 104 and the first compliant stamping surface 116 of the elastomeric layer 114. In a further example, the elastomeric layer 114 is removably secured to the second stamping tool 110. In another further example, the elastomeric layer 114 is configured to conform to the first forming face 108 of the first stamping tool 104 in response to engagement of the first forming face 108 with the workpiece 102, engagement of the workpiece 102 with the first compliant stamping surface 116 of the elastomeric layer 114 and engagement of the second compliant stamping surface 118 of the elastomeric layer 114 with the second forming face 112 of the second stamping tool 110.

In still another example of the tooling set 100, the first stamping tool 104, the second stamping tool 110 and the elastomeric layer 114 are configured for placement of the workpiece 102 between the second forming face 112 of the second stamping tool 110 and the second compliant stamping surface 118 of the elastomeric layer 114. In a further example, the elastomeric layer 114 is removably secured to the first stamping tool 104. In another further example, the elastomeric layer 114 is configured to conform to the second forming face 112 of the second stamping in response to engagement of the second forming face 112 with the workpiece 102, engagement of the workpiece 102 with the second compliant stamping surface 118 of the elastomeric layer 114 and engagement of the first compliant stamping surface 116 of the elastomeric layer 114 with the first forming face 108 of the second stamping tool 110.

In still yet another example of the tooling set 100, the elastomeric layer 114 is replaceable.

In another example of the tooling set 100, the elastomeric layer 114 includes a silicone rubber, a neoprene rubber, a fluoroelastomer rubber, a fiber reinforced rubber, a particulate reinforced rubber, a nitrile rubber, a butadiene rubber, a urethane rubber, a gum rubber, an ethylene propylene diene monomer (EPDM) rubber, a foam rubber, a sponge rubber, a styrene-butadiene rubber or any other suitable elastomeric material in any suitable combination.

In yet another example of the tooling set 100, the elastomeric layer 114 has a minimal thickness of about 1/32 inch, about 1/16 inch, about 1/8 inch, about 3/16 inch, about 3/32 inch, about 1/4 inch, about 3/8 inch, about 1/2 inch, about 3/4 inch, about 1 inch, about 1-1/2 inch, about 2 inches or any other suitable minimum thickness. In still another example of the tooling set 100, the elastomeric layer 114 has a length ranging from about 0.25 feet to about 200 feet, 0.5 feet to about 100 feet, about 1 foot to about 50 feet, about 2 feet to 25 feet, about 4 feet to about 12.5 feet or any other suitable range of length. In still yet another example of the tooling set 100, the elastomeric layer 114 has a height ranging from about 3 inches feet to about 144 inches, about 6 inches to about 72 inches, about 12 inches to 36 inches or any other suitable range of height.

In another example of the tooling set 100, the thickness of the elastomeric layer 114 is based at least in part on stamping surface tolerances of the first stamping tool 104 and the second stamping tool 110. In yet another example of the tooling set 100, the thickness of the elastomeric layer 114 is based at least in part on variations in thickness of the workpiece 102 and/or thickness tolerances of the workpiece 102.

In still another example of the tooling set 100, the elastomeric layer 114 is configured to deform from high pressure areas to low pressure areas when the first stamping tool 104 and the second stamping tool 110 are approximated to compress the workpiece 102 and the elastomeric layer 114. In a further example, deformation of the elastomeric layer 114 balances pressure on the workpiece 102 when the first stamping tool 104 and the second stamping tool 110 are approximated to compress the workpiece 102 and the elastomeric layer 114.

In still yet another example of the tooling set 100, the elastomeric layer 114 has a stiffness ranging from about 0.1 MPa to about 500 MPa, about 0.5 MPa to about 250 MPa, 1 MPa to about 50 MPa, about 2 MPa to about 25 MPa, about 4 MPa to about 12.5 MPa or any other suitable range of stiffness. In another example of the tooling set 100, the elastomeric layer 114 has a stiffness that is less than a stiffness for the workpiece 102 as a thermoplastic matrix of the workpiece 102 transitions to a solid at a solidification temperature.

In yet another example of the tooling set 100, the elastomeric layer 114 is configured for use at a maximum temperature of about 350 °C, about 325 °C, about 300 °C, about 275 °C, about 250 °C, about 225 °C, about 200 °C, about 175 °C, about 150 °C or any other suitable maximum temperature. In still another example of the tooling set 100, the elastomeric layer 114 is configured for use in other tooling sets 100 with different stamping tools 104, 110 having different forming faces 108, 112.

In still yet another example of the tooling set 100, the first forming face 108, the second forming face 112, the first compliant stamping surface 116 and the second compliant stamping surface 118 extend outward from a stamping axis 106.

In another example of the tooling set 100, the first stamping tool 104 and the second stamping tool 110 are matched dies. In yet another example of the tooling set 100, the first stamping tool 104 and the second stamping tool 110 include a metal element, a metal alloy or any other suitable material in any suitable combination.

In still another example of the tooling set 100, the workpiece 102 is a thermoplastic composite material that includes reinforcement fibers embedded in a thermoplastic matrix material.

In still yet another example, the tooling set 100 also includes a second elastomeric layer 2002 having a thickness along a stamping axis 106, disposed between the first stamping tool 104 and the second stamping tool 110 and adjacent to the elastomeric layer 114. The second elastomeric layer 2002 defines a third compliant stamping surface 2004 opposing the first forming face 108 of the first stamping tool 104 and defines a fourth compliant stamping surface 2006 opposing the second forming face 112 of the second stamping tool 110.

In a further example, the first stamping tool 104, the second stamping tool 110, the elastomeric layer 114 and the second elastomeric layer 2002 are configured for placement of the workpiece 102 between the second compliant stamping surface 118 of the elastomeric layer 114 and the third compliant stamping surface 2004 of the second elastomeric layer 2002. In an even further example, the elastomeric layer 114 is removably secured to the first stamping tool 104 and the second elastomeric layer 2002 is removably secured to the second stamping tool 110.

In another further example, the first stamping tool 104, the second stamping tool 110, the elastomeric layer 114 and the second elastomeric layer 2002 are configured for placement of the workpiece 102 between the fourth compliant stamping surface 2006 of the second elastomeric layer 2002 and the second forming face 112 of the second stamping tool 110. In an even further example, the elastomeric layer 114 and the second elastomeric layer 2002 are removably secured to the first stamping tool 104.

In yet another further example, the first stamping tool 104, the second stamping tool 110, the elastomeric layer 114 and the second elastomeric layer 2002 are configured for placement of the workpiece 102 between the first compliant stamping surface 116 of the elastomeric layer 114 and the fourth compliant stamping surface 2006 of the second elastomeric layer 2002.

In an even further example, the elastomeric layer 114 is removably secured to the second stamping tool 110 and the second elastomeric layer 2002 is removably secured to the first stamping tool 104.

In another even further example, the first stamping tool 104, the second stamping tool 110, the elastomeric layer 114 and the second elastomeric layer 2002 are configured for placement of the workpiece 102 between the first forming face 108 of the first stamping tool 104 and the third compliant stamping surface 2004 of the second elastomeric layer 2002. In an even yet further example, the elastomeric layer 114 and the second elastomeric layer 2002 are removably secured to the second stamping tool 110.

In yet another even further example, the second elastomeric layer 2002 has different properties from the elastomeric layer 114.

In still another even further example, the third compliant stamping surface 2004 and the fourth compliant stamping surface 2006 extend outward from a stamping axis 106.

Referring generally to Figs. 1 and 20-23, by way of examples, the present disclosure is directed to a system 2008 for stamp forming a workpiece 102. Fig. 1 discloses an example of a tooling set 100 that includes a first stamping tool 104, a second stamping tool 110 and an elastomeric layer 114. Figs. 20 and 21 disclose examples of systems 2008 for stamp forming a workpiece 102 that include a tooling set 2000 that includes a first stamping tool 104, a second stamping tool 110 and an elastomeric layer 114. The tooling set 2000 may also include a second elastomeric layer 2002. Fig. 22 discloses an example of a tooling set 100' in which a workpiece 102' is between a first stamping tool 104' and the elastomeric layer 114. Fig. 23 discloses an example of a tooling set 100" in which a workpiece 102" is between a first stamping tool 104" and the elastomeric layer 114.

With reference again to Figs. 1, 20 and 21, in one or more examples, a system 2008 for stamp forming a workpiece 102 includes a tooling set 2000. The tooling set 2000 includes a first stamping tool 104, a second stamping tool 110 and an elastomeric layer 114. The first stamping tool 104 has a thickness and defines a first forming face 108. The second stamping tool 110 has a thickness and defines a second forming face 112 opposing the first forming face 108. The elastomeric layer 114 has a thickness and is disposed between the first stamping tool 104 and the second stamping tool 110. The elastomeric layer 114 defines a first compliant stamping surface 116 opposing the first forming face 108 and defines a second compliant stamping surface 118 opposing the second forming face 112.

In another example of the system 2008, the elastomeric layer 114 of the tooling set 2000 includes an elastomeric sheet. In a further example, the elastomeric sheet has an even thickness. In another further example, the elastomeric sheet is a commercial off-the-shelf elastomeric sheet.

In yet another example of the system 2008, the first stamping tool 104, the second stamping tool 110 and the elastomeric layer 114 are configured for placement of the workpiece 102 between the first forming face 108 of the first stamping tool 104 and the first compliant stamping surface 116 of the elastomeric layer 114. In a further example, the elastomeric layer 114 is removably secured to the second stamping tool 110. In another further example, the elastomeric layer 114 is configured to conform to the first forming face 108 of the first stamping tool 104 in response to engagement of the first forming face 108 with the workpiece 102, engagement of the workpiece 102 with the first compliant stamping surface 116 of the elastomeric layer 114 and engagement of the second compliant stamping surface 118 of the elastomeric layer 114 with the second forming face 112 of the second stamping tool 110.

In still another example of the system 2008, the first stamping tool 104, the second stamping tool 110 and the elastomeric layer 114 are configured for placement of the workpiece 102 between the second forming face 112 of the second stamping tool 110 and the second compliant stamping surface 118 of the elastomeric layer 114. In a further example, the elastomeric layer 114 is removably secured to the first stamping tool 104. In another further example, the elastomeric layer 114 is configured to conform to the second forming face 112 of the second stamping in response to engagement of the second forming face 112 with the workpiece 102, engagement of the workpiece 102 with the second compliant stamping surface 118 of the elastomeric layer 114 and engagement of the first compliant stamping surface 116 of the elastomeric layer 114 with the first forming face 108 of the second stamping tool 110.

In still yet another example of the system 2008, the elastomeric layer 114 is replaceable.

In another example of the system 2008, the elastomeric layer 114 is configured to deform from high pressure areas to low pressure areas when the first stamping tool 104 and the second stamping tool 110 are approximated to compress the workpiece 102 and the elastomeric layer 114. In a further example, deformation of the elastomeric layer 114 balances pressure on the workpiece 102 when the first stamping tool 104and the second stamping tool 110 are approximated to compress the workpiece 102 and the elastomeric layer 114.

In yet another example of the system 2008, the elastomeric layer 114 is configured for use in other tooling sets 2000 with different stamping tools 104, 110 having different forming faces 108, 112.

In still another example of the system 2008, the workpiece 102 is a thermoplastic composite material that includes reinforcement fibers embedded in a thermoplastic matrix material. In a further example, the workpiece 102 is preheated to at least a predetermined melting temperature of the thermoplastic matrix material of the workpiece 102. In another further example, the system 2008 also includes at least one heater configured to preheat the first stamping tool 104, the second stamping tool 110 and the elastomeric layer 114 to a predetermined solidification temperature of the thermoplastic matrix material of the workpiece 102.

In still yet another example of the system 2008, the tooling set 2000 also includes a second elastomeric layer 2002 having a thickness along a stamping axis 106, disposed between the first stamping tool 104 and the second stamping tool 110 and adjacent to the elastomeric layer 114. The second elastomeric layer 2002 defines a third compliant stamping surface 2004 opposing the first forming face 108 of the first stamping tool 104 and defines a fourth compliant stamping surface 2006 opposing the second forming face 112 of the second stamping tool 110.

In a further example, the first stamping tool 104, the second stamping tool 110, the elastomeric layer 114 and the second elastomeric layer 2002 are configured for placement of the workpiece 102 between the second compliant stamping surface 118 of the elastomeric layer 114 and the third compliant stamping surface 2004 of the second elastomeric layer 2002. In an even further example, the elastomeric layer 114 is removably secured to the first stamping tool 104 and the second elastomeric layer 2002 is removably secured to the second stamping tool 110.

In another further example, the first stamping tool 104, the second stamping tool 110, the elastomeric layer 114 and the second elastomeric layer 2002 are configured for placement of the workpiece 102 between the fourth compliant stamping surface 2006 of the second elastomeric layer 2002 and the second forming face 112 of the second stamping tool 110. In an even further example, the elastomeric layer 114 and the second elastomeric layer 2002 are removably secured to the first stamping tool 104.

In yet another further example, the first stamping tool 104, the second stamping tool 110, the elastomeric layer 114 and the second elastomeric layer 2002 are configured for placement of the workpiece 102 between the first compliant stamping surface 116 of the elastomeric layer 114 and the fourth compliant stamping surface 2006 of the second elastomeric layer 2002. In an even further example, the elastomeric layer 114 is removably secured to the second stamping tool 110 and the second elastomeric layer 2002 is removably secured to the first stamping tool 104.

In still another further example, the first stamping tool 104, the second stamping tool 110, the elastomeric layer 114 and the second elastomeric layer 2002 are configured for placement of the workpiece 102 between the first forming face 108 of the first stamping tool 104 and the third compliant stamping surface 2004 of the second elastomeric layer 2002. In an even further example, the elastomeric layer 114 and the second elastomeric layer 2002 are removably secured to the second stamping tool 110.

In still yet another further example, the second elastomeric layer 2002 has different properties from the elastomeric layer 114.

Examples of methods 200, 300, 400, 500, 600, 700 800, 900, 1000, 1100, 1200, 1300, 1400, 1500, 1600, 1700, 1800, 1900, tooling sets 100, 2000 and systems 2008 for stamp forming a workpiece 102 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of stamped workpieces in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1 and 20-23, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1 and 20-23, referred to above, need be included in every example and not all elements, features, and/or components described herein are necessarily depicted in each illustrative example. Accordingly, some of the elements, features, and/or components described and illustrated in Figs. 1 and 20-23 may be combined in various ways without the need to include other features described and illustrated in Figs. 1 and 20-23, other drawing figures, and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1 and 20-23, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1 and 20-23, and such elements, features, and/or components may not be discussed in detail herein with reference to each of Figs. 1 and 20-23. Similarly, all elements, features, and/or components may not be labeled in each of Figs. 1 and 20-23, but reference numerals associated therewith may be utilized herein for consistency.

In Figs. 2-19, referred to above, the blocks may represent operations, steps, and/or portions thereof, and lines connecting the various blocks do not imply any particular order or dependency of the operations or portions thereof. It will be understood that not all dependencies among the various disclosed operations are necessarily represented. Figs. 2-19 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

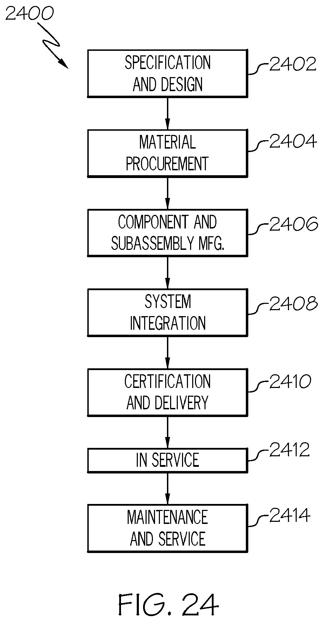

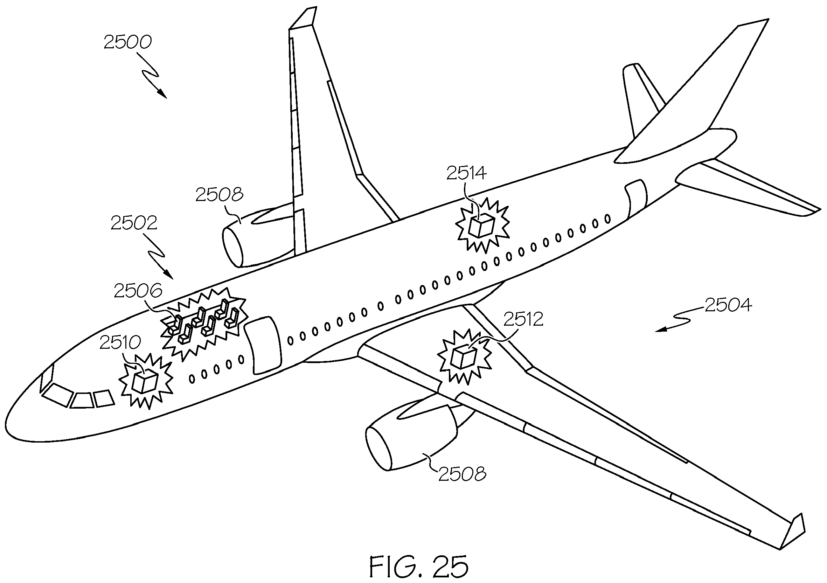

Examples of the subject matter disclosed herein may be described in the context of aircraft manufacturing and service method 2400 as shown in Fig. 24 and aircraft 2500 as shown in Fig. 25. In one or more examples, the disclosed methods, tooling sets and systems for stamp forming a workpiece may be used in aircraft manufacturing. During pre-production, the service method 2400 may include specification and design (block 2402) of aircraft 2500 and material procurement (block 2404). During production, component and subassembly manufacturing (block 2406) and system integration (block 2408) of aircraft 2500 may take place. Thereafter, aircraft 2500 may go through certification and delivery (block 2410) to be placed in service (block 2412). While in service, aircraft 2500 may be scheduled for routine maintenance and service (block 2414). Routine maintenance and service may include modification, reconfiguration, refurbishment, etc. of one or more systems of aircraft 2500.

Each of the processes of the service method 2400 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 25, aircraft 2500 produced by the service method 2400 may include airframe 2502 with a plurality of high-level systems 2504 and interior 2506. Examples of high-level systems 2504 include one or more of propulsion system 2508, electrical system 2510, hydraulic system 2512, and environmental system 2514. Any number of other systems may be included. Although an aerospace example is shown, the principles disclosed herein may be applied to other industries, such as the automotive industry. Accordingly, in addition to aircraft 2500, the principles disclosed herein may apply to other vehicles, e.g., land vehicles, marine vehicles, space vehicles, etc.

The disclosed tooling sets, systems and methods for stamping a workpiece may be employed during any one or more of the stages of the manufacturing and service method 2400. For example, components or subassemblies corresponding to component and subassembly manufacturing (block 2406) may be fabricated or manufactured in a manner similar to components or subassemblies produced while aircraft 2500 is in service (block 2412). Also, one or more examples of the tooling set(s), system(s), method(s), or any combination thereof may be utilized during production stages (block 2406 and block 2408), for example, by substantially expediting assembly of or reducing the cost of aircraft 2500. Similarly, one or more examples of the tooling set, system or method realizations, or a combination thereof, may be utilized, for example and without limitation, while aircraft 2500 is in service (block 2412) and/or during maintenance and service (block 2414).

Further, the current disclosure comprises embodiments according to the following clauses:
Clause 1. A method for stamp forming a workpiece, the method comprising:
   positioning the workpiece between a first stamping tool and an elastomeric layer opposing the first stamping tool, the elastomeric layer disposed between the first stamping tool and a second stamping tool, the first stamping tool defining a first forming face and the second stamping tool defining a second forming face opposing the first forming face, the elastomeric layer defining a first compliant stamping surface opposing the first forming face and a second compliant stamping surface opposing the second forming face; and
   compressing the workpiece between the first forming face and the first compliant stamping surface in response to the first stamping tool and the second stamping tool being approximated.
Clause 2. The method of Clause 1 wherein the elastomeric layer comprises an elastomeric sheet.
Clause 3. The method of Clause 2 wherein the elastomeric sheet has an even thickness.
Clause 4. The method of Clause 2 or 3 wherein the elastomeric sheet is a commercial off-the-shelf elastomeric sheet.
Clause 5. The method of any of Clauses 1 to 4 wherein the elastomeric layer is removably secured to the second stamping tool.
Clause 6. The method of any of Clauses 1 to 5, further comprising:
   positioning the elastomeric layer between the first stamping tool and the second stamping tool.
Clause 7. The method of any of Clauses 1 to 6, in response to reaching a predetermined pressure during the compressing, the method further comprising:
   deforming the first compliant stamping surface of the elastomeric layer based on a first geometry of the first forming face;
   deforming the second compliant stamping surface of the elastomeric layer based on a second geometry of the second forming face; and
   deforming the workpiece based on the first geometry of the first forming face, the deformed first compliant stamping surface, the deformed second compliant stamping surface and the second geometry of the second forming face.
Clause 8. The method of Clause 7 wherein the predetermined pressure comprises at least one of about 400 psi or higher, about 300 psi or higher, about 200 psi or higher and about 100 psi or higher.
Clause 9. The method of Clause 7 or 8 wherein the first geometry of the first forming face comprises at least one of a flat portion, a contour portion, a protruding portion, a ramping portion, a declining portion, a stepping portion and a convex portion.
Clause 10. The method of any of Clauses 7 to 9 wherein the second geometry of the second forming face matches the first geometry of the first forming face.
Clause 11. The method of any of Clauses 1 to 10 wherein the workpiece is a thermoplastic composite material comprising reinforcement fibers embedded in a thermoplastic matrix material.
Clause 12. The method of Clause 11, further comprising:
   preheating the workpiece to at least a predetermined melting temperature of the thermoplastic matrix material.
Clause 13. The method of Clause 12 wherein the predetermined melting temperature ranges between at least one of about 300° C and about 500° C, about 300° C and about 400° C and about 300° C and about 360° C.
Clause 14. The method of any of Clauses 11 to 13, further comprising:
   preheating the first stamping tool, the second stamping tool and the elastomeric layer to a predetermined solidification temperature for the thermoplastic matrix material.
Clause 15. The method of Clause 14 wherein the predetermined solidification temperature ranges between at least one of about 150 ° C and about 300 ° C, about 200° C and about 300° C and about 250° C and about 300° C.
Clause 16. The method of any of Clauses 11 to 15, further comprising:
   consolidating the workpiece in response to reaching a predetermined pressure during the compressing.
Clause 17. The method of Clause 16 wherein the predetermined pressure comprises at least one of about 400 psi or higher, about 300 psi or higher, about 200 psi or higher and about 100 psi or higher.
Clause 18. The method of any of Clauses 1 to 17, further comprising:
   separating the first stamping tool and the second stamping tool to release the workpiece; and
   removing the workpiece from between the first forming face and the first compliant stamping surface.
Clause 19. The method of any of Clauses 1 to 18, further comprising:
   positioning a second elastomeric layer between the elastomeric layer and the workpiece along a stamping axis, the second elastomeric layer defining a third compliant stamping surface opposing the second compliant stamping surface and a fourth compliant stamping surface facing the workpiece and opposing the second forming face.
Clause 20. The method of Clause 19 wherein the elastomeric layer and the second elastomeric layer are removably secured to the first stamping tool.
Clause 21. The method of Clause 19 or 20 wherein the second elastomeric layer has different properties from the elastomeric layer.
Clause 22. The method of any of Clauses 1 to 21, further comprising:
   positioning a second elastomeric layer between the first stamping tool and the workpiece along a stamping axis, the second elastomeric layer defining a third compliant stamping surface opposing the first forming face and a fourth compliant stamping surface facing the workpiece and opposing the second forming face.
Clause 23. The method of Clause 22 wherein the second elastomeric layer is removably secured to the first stamping tool.
Clause 24. The method of Clause 22 or 23, in response to reaching a predetermined pressure during the compressing, the method further comprising:
   deforming the third compliant stamping surface of the second elastomeric layer based on a first geometry of the first forming face;
   deforming the second compliant stamping surface of the elastomeric layer based on a second geometry of the second forming face; and
   deforming the workpiece based on the first geometry of the first forming face, the deformed third compliant stamping surface, the deformed second compliant stamping surface and the second geometry of the second forming face.
Clause 25. The method of any of Clauses 22 to 24 wherein the workpiece is a thermoplastic composite material comprising reinforcement fibers embedded in a thermoplastic matrix material.
Clause 26. The method of Clause 25, further comprising:
   preheating the workpiece to at least a predetermined melting temperature of the thermoplastic matrix material.
Clause 27. The method of Clause 25 or 26, further comprising:
   preheating the first stamping tool, the second stamping tool, the elastomeric layer and the second elastomeric layer to a predetermined solidification temperature for the thermoplastic matrix material.
Clause 28. The method of any of Clauses 25 to 27, further comprising:
   consolidating the workpiece in response to reaching a predetermined pressure during the compressing.
Clause 29. The method of any of Clauses 22 to 28, further comprising:
   separating the first stamping tool and the second stamping tool to release the workpiece;
   removing the second elastomeric layer and the workpiece from between the second forming face and the first compliant stamping surface; and
   removing the workpiece from the fourth compliant stamping surface of the second elastomeric layer.
Clause 30. A method for stamp forming a workpiece, the method comprising:
   positioning the workpiece between a first stamping tool and a second stamping tool, the first stamping tool defining a first forming face and the second stamping tool defining a second forming face opposing the first forming face;
   positioning an elastomeric layer between the first stamping tool and the workpiece, the elastomeric layer defining a first compliant stamping surface opposing the first forming face and a second compliant stamping surface opposing the second forming face and facing the workpiece; and
   compressing the workpiece between the second compliant stamping surface and the second forming face in response to the first stamping tool and the second stamping tool being approximated.
Clause 31. The method of Clause 30 wherein the elastomeric layer comprises an elastomeric sheet.
Clause 32. The method of Clause 31 wherein the elastomeric sheet has an even thickness.
Clause 33. The method of Clause 31 or 32 wherein the elastomeric sheet is a commercial off-the-shelf elastomeric sheet.
Clause 34. The method of any of Clauses 30 to 33 wherein the elastomeric layer is removably secured to the first stamping tool.
Clause 35. The method of any of Clauses 30 to 34, in response to reaching a predetermined pressure during the compressing, the method further comprising:
   deforming the first compliant stamping surface of the elastomeric layer based on a first geometry of the first forming face;
   deforming the second compliant stamping surface of the elastomeric layer based on a second geometry of the second forming face; and
   deforming the workpiece based on the first geometry of the first forming face, the deformed first compliant stamping surface, the deformed second compliant stamping surface and the second geometry of the second forming face.
Clause 36. The method of any of Clauses 30 to 35 wherein the workpiece is a thermoplastic composite material comprising reinforcement fibers embedded in a thermoplastic matrix material.
Clause 37. The method of Clause 36, further comprising:
   preheating the workpiece to at least a predetermined melting temperature of the thermoplastic matrix material.
Clause 38. The method of Clause 36 or 37, further comprising:
   preheating the first stamping tool, the second stamping tool and the elastomeric layer to a predetermined solidification temperature for the thermoplastic matrix material.
Clause 39. The method of any of Clauses 36 to 38, further comprising:
   consolidating the workpiece in response to reaching a predetermined pressure during the compressing.
Clause 40. The method of any of Clauses 30 to 39, further comprising:
   separating the first stamping tool and the second stamping tool to release the workpiece;
   removing the elastomeric layer and the workpiece from the second forming face; and
   removing the workpiece from the second compliant surface of the elastomeric layer.
Clause 41. The method of any of Clauses 30 to 40, further comprising:
   positioning a second elastomeric layer between the workpiece and the elastomeric layer along a stamping axis, the second elastomeric layer defining a third compliant stamping surface facing the workpiece and opposing the first forming face and a fourth compliant stamping surface opposing the first forming face of the elastomeric layer.
Clause 42. The method of Clause 41 wherein the elastomeric layer and the second elastomeric layer are removably secured to the second stamping tool.
Clause 43. The method of Clause 41 or 42 wherein the second elastomeric layer has different properties from the elastomeric layer.
Clause 44. The method of any of Clauses 30 to 43, further comprising:
   positioning a second elastomeric layer between the workpiece and the second stamping tool along a stamping axis, the second elastomeric layer defining a third compliant stamping surface facing the workpiece and opposing the first forming face and a fourth compliant stamping surface opposing the second forming face.
Clause 45. The method of Clause 44 wherein the second elastomeric layer is removably secured to the second stamping tool.
Clause 46. The method of Clause 44 or 45, in response to reaching a predetermined pressure during the compressing, the method further comprising:
   deforming the second compliant stamping surface of the elastomeric layer based on a first geometry of the first forming face;
   deforming the third compliant stamping surface of the second elastomeric layer based on a second geometry of the second forming face; and
   deforming the workpiece based on the first geometry of the first forming face, the deformed second compliant stamping surface, the deformed third compliant stamping surface and the second geometry of the second forming face.
Clause 47. The method of any of Clauses 44 to 46 wherein the workpiece is a thermoplastic composite material comprising reinforcement fibers embedded in a thermoplastic matrix material.
Clause 48. The method of Clause 47, further comprising:
   preheating the workpiece to at least a predetermined melting temperature of the thermoplastic matrix material.
Clause 49. The method of Clause 47 or 48, further comprising:
   preheating the first stamping tool, the second stamping tool, the elastomeric layer and the second elastomeric layer to a predetermined solidification temperature for the thermoplastic matrix material.
Clause 50. The method of any of Clauses 47 to 49, further comprising:
   consolidating the workpiece in response to reaching a predetermined pressure during the compressing.
Clause 51. The method of any of Clauses 44 to 50, further comprising:
   separating the first stamping tool and the second stamping tool to release the workpiece;
   removing the workpiece and the second elastomeric layer from the second forming face; and
   removing the workpiece from the third compliant surface of the second elastomeric layer.
Clause 52. A tooling set for stamp forming a workpiece, the tooling set comprising:
   a first stamping tool having a thickness and defining a first forming face;
   a second stamping tool having a thickness and defining a second forming face opposing the first forming face; and
   an elastomeric layer having a thickness and disposed between the first stamping tool and the second stamping tool, the elastomeric layer defining a first compliant stamping surface opposing the first forming face and defining a second compliant stamping surface opposing the second forming face.
Clause 53. The tooling set of Clause 52 wherein the elastomeric layer comprises an elastomeric sheet.
Clause 54. The tooling set of Clause 53 wherein the elastomeric sheet has an even thickness.
Clause 55. The tooling set of Clause 53 or 54 wherein the elastomeric sheet is a commercial off-the-shelf elastomeric sheet.
Clause 56. The tooling set of any of Clauses 52 to 55 wherein the first stamping tool, the second stamping tool and the elastomeric layer are configured for placement of the workpiece between the first forming face of the first stamping tool and the first compliant stamping surface of the elastomeric layer.
Clause 57. The tooling set of Clause 56 wherein the elastomeric layer is removably secured to the second stamping tool.
Clause 58. The tooling set of Clause 56 or 57 wherein the elastomeric layer is configured to conform to the first forming face of the first stamping tool in response to engagement of the first forming face with the workpiece, engagement of the workpiece with the first compliant stamping surface of the elastomeric layer and engagement of the second compliant stamping surface of the elastomeric layer with the second forming face of the second stamping tool.
Clause 59. The tooling set of any of Clauses 52 to 58 wherein the first stamping tool, the second stamping tool and the elastomeric layer are configured for placement of the workpiece between the second forming face of the second stamping tool and the second compliant stamping surface of the elastomeric layer.
Clause 60. The tooling set of Clause 59 wherein the elastomeric layer is removably secured to the first stamping tool.
Clause 61. The tooling set of Clause 59 or 60 wherein the elastomeric layer is configured to conform to the second forming face of the second stamping in response to engagement of the second forming face with the workpiece, engagement of the workpiece with the second compliant stamping surface of the elastomeric layer and engagement of the first compliant stamping surface of the elastomeric layer with the first forming face of the second stamping tool.
Clause 62. The tooling set of any of Clauses 52 to 61 wherein the elastomeric layer is replaceable.
Clause 63. The tooling set of any of Clauses 52 to 62 wherein the elastomeric layer comprises at least one of a silicone rubber, a neoprene rubber, a fluoroelastomer rubber, a fiber reinforced rubber, a particulate reinforced rubber, a nitrile rubber, a butadiene rubber, a urethane rubber, a gum rubber, an ethylene propylene diene monomer (EPDM) rubber, a foam rubber, a sponge rubber and a styrene-butadiene rubber.
Clause 64. The tooling set of any of Clauses 52 to 63 wherein the elastomeric layer comprises a minimal thickness of about 1/32 inch, about 1/16 inch, about 1/8 inch, about 3/16 inch, about 3/32 inch, about 1/4 inch, about 3/8 inch, about 1/2 inch, about 3/4 inch, about 1 inch, about 1-1/2 inch or about 2 inches.
Clause 65. The tooling set of any of Clauses 52 to 64 wherein the elastomeric layer comprises a length ranging from about 0.25 feet to about 200 feet, 0.5 feet to about 100 feet, about 1 foot to about 50 feet, about 2 feet to 25 feet and about 4 feet to about 12.5 feet.
Clause 66. The tooling set of any of Clauses 52 to 65 wherein the elastomeric layer comprises a height ranging from about 3 inches feet to about 144 inches, about 6 inches to about 72 inches and about 12 inches to 36 inches.
Clause 67. The tooling set of any of Clauses 52 to 66 wherein the thickness of the elastomeric layer is based at least in part on stamping surface tolerances of the first stamping tool and the second stamping tool.
Clause 68. The tooling set of any of Clauses 52 to 67 wherein the thickness of the elastomeric layer is based at least in part on at least one of variations in thickness of the workpiece and thickness tolerances of the workpiece.
Clause 69. The tooling set of any of Clauses 52 to 68 wherein the elastomeric layer is configured to deform from high pressure areas to low pressure areas when the first stamping tool and the second stamping tool are approximated to compress the workpiece and the elastomeric layer.
Clause 70. The tooling set of Clause 69 wherein deformation of the elastomeric layer balances pressure on the workpiece when the first stamping tool and the second stamping tool are approximated to compress the workpiece and the elastomeric layer.
Clause 71. The tooling set of any of Clauses 52 to 70 wherein the elastomeric layer comprises a stiffness ranging from at least one of about 0.1 MPa to about 500 MPa, about 0.5 MPa to about 250 MPa, 1 MPa to about 50 MPa, about 2 MPa to about 25 MPa and about 4 MPa to about 12.5 MPa.
Clause 72. The tooling set of any of Clauses 52 to 71 wherein the elastomeric layer comprises a stiffness that is less than a stiffness for the workpiece as a thermoplastic matrix of the workpiece transitions to a solid at a solidification temperature.
Clause 73. The tooling set of any of Clauses 52 to 72 wherein the elastomeric layer is configured for use at a maximum temperature of at least one of about 350 °C, about 325 °C, about 300 °C, about 275 °C, about 250 °C, about 225 °C, about 200 °C, about 175 °C and about 150 °C.
Clause 74. The tooling set of any of Clauses 52 to 73 wherein the elastomeric layer is configured for use in other tooling sets with different stamping tools having different forming faces.
Clause 75. The tooling set of any of Clauses 52 to 74 wherein the first forming face, the second forming face, the first compliant stamping surface and the second compliant stamping surface extend outward from a stamping axis.
Clause 76. The tooling set of any of Clauses 52 to 75 wherein the first stamping tool and the second stamping tool are matched dies.
Clause 77. The tooling set of any of Clauses 52 to 76 wherein the first stamping tool and the second stamping tool comprise at least one of a metal element and a metal alloy.
Clause 78. The tooling set of any of Clauses 52 to 77 wherein the workpiece is a thermoplastic composite material comprising reinforcement fibers embedded in a thermoplastic matrix material.
Clause 79. The tooling set of any of Clauses 52 to 78, further comprising:
   a second elastomeric layer having a thickness along a stamping axis, disposed between the first stamping tool and the second stamping tool and adjacent to the elastomeric layer, the second elastomeric layer defining a third compliant stamping surface opposing the first forming face of the first stamping tool and defining a fourth compliant stamping surface opposing the second forming face of the second stamping tool.
Clause 80. The tooling set of Clause 79 wherein the first stamping tool, the second stamping tool, the elastomeric layer and the second elastomeric layer are configured for placement of the workpiece between the second compliant stamping surface of the elastomeric layer and the third compliant stamping surface of the second elastomeric layer.
Clause 81. The tooling set of Clause 80 wherein the elastomeric layer is removably secured to the first stamping tool and the second elastomeric layer is removably secured to the second stamping tool.
Clause 82. The tooling set of any of Clauses 79 to 81 wherein the first stamping tool, the second stamping tool, the elastomeric layer and the second elastomeric layer are configured for placement of the workpiece between the fourth compliant stamping surface of the second elastomeric layer and the second forming face of the second stamping tool.
Clause 83. The tooling set of Clause 82 wherein the elastomeric layer and the second elastomeric layer are removably secured to the first stamping tool.
Clause 84. The tooling set of any of Clauses 79 to 83 wherein the first stamping tool, the second stamping tool, the elastomeric layer and the second elastomeric layer are configured for placement of the workpiece between the first compliant stamping surface of the elastomeric layer and the fourth compliant stamping surface of the second elastomeric layer.
Clause 85. The tooling set of Clause 84 wherein the elastomeric layer is removably secured to the second stamping tool and the second elastomeric layer is removably secured to the first stamping tool.
Clause 86. The tooling set of Clause 84 or 85 wherein the first stamping tool, the second stamping tool, the elastomeric layer and the second elastomeric layer are configured for placement of the workpiece between the first forming face of the first stamping tool and the third compliant stamping surface of the second elastomeric layer.
Clause 87. The tooling set of Clause 86 wherein the elastomeric layer and the second elastomeric layer are removably secured to the second stamping tool.
Clause 88. The tooling set of any of Clauses 84 to 87 wherein the second elastomeric layer has different properties from the elastomeric layer.
Clause 89. The tooling set of any of Clauses 84 to 88wherein the third compliant stamping surface and the fourth compliant stamping surface extend outward from a stamping axis.
Clause 90. A system for stamp forming a workpiece, the system comprising:
   a tooling set comprising:
   a first stamping tool having a thickness and defining a first forming face;
   a second stamping tool having a thickness and defining a second forming face opposing the first forming face; and
   an elastomeric layer having a thickness and disposed between the first stamping tool and the second stamping tool, the elastomeric layer defining a first compliant stamping surface opposing the first forming face and defining a second compliant stamping surface opposing the second forming face.
Clause 91. The system of Clause 90 wherein the elastomeric layer of the tooling set comprises an elastomeric sheet.
Clause 92. The system of Clause 91 wherein the elastomeric sheet has an even thickness.
Clause 93. The system of Clause 91 or 92 wherein the elastomeric sheet is a commercial off-the-shelf elastomeric sheet.
Clause 94. The system of any of Clauses 90 to 93 wherein the first stamping tool, the second stamping tool and the elastomeric layer are configured for placement of the workpiece between the first forming face of the first stamping tool and the first compliant stamping surface of the elastomeric layer.
Clause 95. The system of Clause 94 wherein the elastomeric layer is removably secured to the second stamping tool.
Clause 96. The system of Clause 94 or 95 wherein the elastomeric layer is configured to conform to the first forming face of the first stamping tool in response to engagement of the first forming face with the workpiece, engagement of the workpiece with the first compliant stamping surface of the elastomeric layer and engagement of the second compliant stamping surface of the elastomeric layer with the second forming face of the second stamping tool.
Clause 97. The system of any of Clauses 90 to 96 wherein the first stamping tool, the second stamping tool and the elastomeric layer are configured for placement of the workpiece between the second forming face of the second stamping tool and the second compliant stamping surface of the elastomeric layer.
Clause 98. The system of Clause 97 wherein the elastomeric layer is removably secured to the first stamping tool.
Clause 99. The system of Clause 97 or 98 wherein the elastomeric layer is configured to conform to the second forming face of the second stamping in response to engagement of the second forming face with the workpiece, engagement of the workpiece with the second compliant stamping surface of the elastomeric layer and engagement of the first compliant stamping surface of the elastomeric layer with the first forming face of the second stamping tool.
Clause 100. The system of any of Clauses 90 to 99 wherein the elastomeric layer is replaceable.
Clause 101. The system of any of Clauses 90 to 100 wherein the elastomeric layer is configured to deform from high pressure areas to low pressure areas when the first stamping tool and the second stamping tool are approximated to compress the workpiece and the elastomeric layer.
Clause 102. The system of Clause 101 wherein deformation of the elastomeric layer balances pressure on the workpiece when the first stamping tool and the second stamping tool are approximated to compress the workpiece and the elastomeric layer.
Clause 103. The system of any of Clauses 90 to 102 wherein the elastomeric layer is configured for use in other tooling sets with different stamping tools having different forming faces.
Clause 104. The system of any of Clauses 90 to 103 wherein the workpiece is a thermoplastic composite material comprising reinforcement fibers embedded in a thermoplastic matrix material.
Clause 105. The system of Clause 104 wherein the workpiece is preheated to at least a predetermined melting temperature of the thermoplastic matrix material of the workpiece. Clause 106. The system of Clause 104 or 105, further comprising:
   at least one heater configured to preheat the first stamping tool, the second stamping tool and the elastomeric layer to a predetermined solidification temperature of the thermoplastic matrix material of the workpiece.
Clause 107. The system of any of Clauses 90 to 106, the tooling set further comprising:
   a second elastomeric layer having a thickness along a stamping axis, disposed between the first stamping tool and the second stamping tool and adjacent to the elastomeric layer, the second elastomeric layer defining a third compliant stamping surface opposing the first forming face of the first stamping tool and defining a fourth compliant stamping surface opposing the second forming face of the second stamping tool.
Clause 108. The system of Clause 107 wherein the first stamping tool, the second stamping tool, the elastomeric layer and the second elastomeric layer are configured for placement of the workpiece between the second compliant stamping surface of the elastomeric layer and the third compliant stamping surface of the second elastomeric layer.
Clause 109. The system of Clause 108 wherein the elastomeric layer is removably secured to the first stamping tool and the second elastomeric layer is removably secured to the second stamping tool.
Clause 110. The system of any of Clauses 107 to 109 wherein the first stamping tool, the second stamping tool, the elastomeric layer and the second elastomeric layer are configured for placement of the workpiece between the fourth compliant stamping surface of the second elastomeric layer and the second forming face of the second stamping tool.
Clause 111. The system of Clause 110 wherein the elastomeric layer and the second elastomeric layer are removably secured to the first stamping tool.
Clause 112. The system of any of Clauses 107 to 111 wherein the first stamping tool, the second stamping tool, the elastomeric layer and the second elastomeric layer are configured for placement of the workpiece between the first compliant stamping surface of the elastomeric layer and the fourth compliant stamping surface of the second elastomeric layer.
Clause 113. The system of Clause 112 wherein the elastomeric layer is removably secured to the second stamping tool and the second elastomeric layer is removably secured to the first stamping tool.
Clause 114. The system of any of Clauses 107 to 113 wherein the first stamping tool, the second stamping tool, the elastomeric layer and the second elastomeric layer are configured for placement of the workpiece between the first forming face of the first stamping tool and the third compliant stamping surface of the second elastomeric layer.
Clause 115. The system of Clause 114 wherein the elastomeric layer and the second elastomeric layer are removably secured to the second stamping tool.
Clause 116. The system of any of Clauses 107 to 115 wherein the second elastomeric layer has different properties from the elastomeric layer.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the tooling set 100, 2000, system 2008, and methods 200, 300, 400, 500, 600, 700, 800, 900, 1000, 1100, 1200, 1300, 1400, 1500, 1600, 1700, 1800, 1900 for stamp forming a workpiece 102 have been shown and described, modifications may occur to those skilled in the art upon reading the specification. The present application includes such modifications and is limited only by the scope of the claims.

## Claims

1. A method (200) for stamp forming a workpiece (102), the method comprising:
positioning (202) the workpiece (102) between a first stamping tool (104) and an elastomeric layer (114) opposing the first stamping tool (104), the elastomeric layer (114) disposed between the first stamping tool (104) and a second stamping tool (110), the first stamping tool (104) defining a first forming face (108) and the second stamping tool (110) defining a second forming face (112) opposing the first forming face (108), the elastomeric layer (114) defining a first compliant stamping surface (116) opposing the first forming face (108) and a second compliant stamping surface (118) opposing the second forming face (112); and
compressing (204) the workpiece (102) between the first forming face (108) and the first compliant stamping surface (116) in response to the first stamping tool (104) and the second stamping tool (110) being approximated.

2. The method of Claim 1, further comprising:
positioning (206) the elastomeric layer (114) between the first stamping tool (104) and the second stamping tool (110).

3. The method of Claim 1 or 2, in response to reaching a predetermined pressure during the compressing (204), the method further comprising:
deforming (208) the first compliant stamping surface (116) of the elastomeric layer (114) based on a first geometry of the first forming face (108);
deforming (210) the second compliant stamping surface (118) of the elastomeric layer (114) based on a second geometry of the second forming face (112); and
deforming (212) the workpiece (102) based on the first geometry of the first forming face (108), the deformed first compliant stamping surface (116), the deformed second compliant stamping surface (118) and the second geometry of the second forming face (112).

4. The method of any of Claims 1 to 3, wherein the workpiece (102) is a thermoplastic composite material comprising reinforcement fibers embedded in a thermoplastic matrix material.

5. The method of Claim 4, further comprising:
preheating (302) the workpiece (102) to at least a predetermined melting temperature of the thermoplastic matrix material.

6. The method of Claim 4, further comprising:
preheating (304) the first stamping tool (104), the second stamping tool (110) and the elastomeric layer (114) to a predetermined solidification temperature for the thermoplastic matrix material.

7. The method of any of Claims 4 to 6, further comprising:
Consolidating (402) the workpiece (102) in response to reaching a predetermined pressure during the compressing (204).

8. The method of any of Claims 1 to 7, further comprising:
separating (502) the first stamping tool (104) and the second stamping tool (110) to release the workpiece (102); and
removing (504) the workpiece (102) from between the first forming face (108) and the first compliant stamping surface (116).

9. The method of any of Claims 1 to 8, further comprising:
positioning a second elastomeric layer (2002) between the elastomeric layer (114) and the workpiece (102) along a stamping axis (106), the second elastomeric layer (2002) defining a third compliant stamping surface (2004) opposing the second compliant stamping surface (118) and a fourth compliant stamping surface (2006) facing the workpiece (102) and opposing the second forming face (112).

10. The method of any of Claims 1 to 9, further comprising:
positioning (602) a second elastomeric layer (2002) between the first stamping tool (104) and the workpiece (102) along a stamping axis (106), the second elastomeric layer (2002) defining a third compliant stamping surface (2004) opposing the first forming face (108) and a fourth compliant stamping surface (2006) facing the workpiece (102) and opposing the second forming face (112).

11. The method of Claim 10, in response to reaching a predetermined pressure during the compressing (204), the method further comprising:
Deforming (702) the third compliant stamping surface (2004) of the second elastomeric layer (2002) based on a first geometry of the first forming face (108);
deforming (704) the second compliant stamping surface (118) of the elastomeric layer (114) based on a second geometry of the second forming face (112); and
deforming (706) the workpiece (102) based on the first geometry of the first forming face (108), the deformed third compliant stamping surface (2004), the deformed second compliant stamping surface (118) and the second geometry of the second forming face (112).

12. The method of Claim 10 or 11, further comprising:
Separating (1002) the first stamping tool (104) and the second stamping tool (110) to release the workpiece (102);
removing (1004) the second elastomeric layer (2002) and the workpiece (102) from between the second forming face (112) and the first compliant stamping surface (116); and
removing (1006) the workpiece (102) from the fourth compliant stamping surface (2006) of the second elastomeric layer (2002).

13. A method (1100) for stamp forming a workpiece (102), the method comprising:
positioning (1102) the workpiece (102) between a first stamping tool (104) and a second stamping tool (110), the first stamping tool (104) defining a first forming face (108) and the second stamping tool (110) defining a second forming face (112) opposing the first forming face (108);
positioning (1104) an elastomeric layer (114) between the first stamping tool (104) and the workpiece (102), the elastomeric layer (114) defining a first compliant stamping surface (116) opposing the first forming face (108) and a second compliant stamping surface (118) opposing the second forming face (112) and facing the workpiece (102); and
compressing (1106) the workpiece (102) between the second compliant stamping surface (118) and the second forming face (112) in response to the first stamping tool (104) and the second stamping tool (110) being approximated.

14. A tooling set (100) for stamp forming a workpiece (102), the tooling set comprising:
a first stamping tool (104) having a thickness and defining a first forming face (108);
a second stamping tool (110) having a thickness and defining a second forming face (112) opposing the first forming face (108); and
an elastomeric layer (114) having a thickness and disposed between the first stamping tool (104) and the second stamping tool (110), the elastomeric layer (114) defining a first compliant stamping surface (116) opposing the first forming face (108) and defining a second compliant stamping surface (118) opposing the second forming face (112).

15. A system (2008) for stamp forming a workpiece (102), the system comprising:
a tooling set (2000) comprising:
a first stamping tool (104) having a thickness and defining a first forming face (108);
a second stamping tool (110) having a thickness and defining a second forming face (112) opposing the first forming face (108); and
an elastomeric layer (114) having a thickness and disposed between the first stamping tool (104) and the second stamping tool (110), the elastomeric layer (114) defining a first compliant stamping surface (116) opposing the first forming face (108) and defining a second compliant stamping surface (118) opposing the second forming face (112).
